Europäisches Patentamt

European Patent Office

Office européen des brevets

(11) Publication number: **0 319 043**
**A2**

# EUROPEAN PATENT APPLICATION

(21) Application number: 88120185.9

(22) Date of filing: 02.12.88

(51) Int. Cl.4: **C09J 3/14 , C08L 23/16**

(30) Priority: 04.12.87 US 128794

(43) Date of publication of application:
**07.06.89 Bulletin 89/23**

(84) Designated Contracting States:
**AT BE CH DE ES FR GB GR IT LI LU NL SE**

(71) Applicant: **UNION CARBIDE CORPORATION**
**39 Old Ridgebury Road**
**Danbury Connecticut 06817(US)**

(72) Inventor: **Rifi, Mahmoud Rashad**
**28 Dawson Road**
**Kendall Park New Jersey 08824(US)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**D-8000 München 40(DE)**

(54) **Hot melt adhesives.**

(57) An adhesive composition comprising:

    (a) a copolymer of ethylene and at least one alpha-olefin comonomer having 3 to 8 carbon atoms, said copolymer having a density equal to or less than 0.91 gram per cubic centimeter: and

    (b) as a tackifier, at least one rosin ester; is described.

EP 0 319 043 A2

## HOT MELT ADHESIVES

This invention relates to compositions which are useful as flexible, rubbery hot melt adhesives.

Hot melt adhesives are polymeric solids at room temperature. When they are heated to approximately 300° to 400°F, they flow, wet, and adhere to various surfaces to which they are applied. They are based on a variety of polymers such as ethylene/vinyl acetate and ethylene/ethyl acrylate copolymers, polyethylene, styrene/butadiene/styrene block copolymers, ethylene/propylene copolymers and terpolymers, and pale crepe natural rubber. These polymers are the binders for the fillers used in adhesives and for the tackifier resins, and oil and liquid polybutene softeners, which serve as modifiers for the aforementioned polymers in that they lower their softening points and provide the required adhesive qualities. The polymers, in addition to serving as binders, provide the necessary strength for the adhesive materials.

Hot melt adhesives are generally prepared in Baker Perkins type, low shear, sigma blade mixers. Heat is used to melt the polymers and tackifier resins as well as the other ingredients such as the previously mentioned softeners. Rubbers, which are available in bale form, and styrene/butadiene/styrene block copolymers, which are available in crumb form do not, however, readily mix in the sigma blade mixer. Where rubbers serve as the polymeric component, heavier duty mixing machines are needed together with longer mixing times. Rubbers are handled in this manner to avoid breakup of the batch and formation of lumps, which can occur when tackifier resins or oils are added too quickly during the mixing cycle. It is virtually impossible to disperse these rubber lumps once they form. Thus, batches with lumps are discarded.

Other disadvantages of currently used hot melt adhesives, particularly ethylene/vinyl acetate based adhesives, are instability of the comonomer group; moisture sensitivity due to polarity; poor water vapor transmission; poor adhesion to non-polar substrates; poor shear, scuffing, and/or marring resistance due to low molecular weight; poor adhesion at low temperatures due to high glass transition temperature; poor flex life due to rigidity (crystallinity); poor high temperature resistance; and poor aging behavior. Further, the styrene/butadiene and styrene/isoprene block copolymer based hot melt adhesives are expensive.

Hot melt adhesives based on very low density polyethylene in combination with a broad spectrum of tackifiers have been suggested to overcome these deficiencies and they have succeeded for the most part in doing so relatively inexpensively with one particular shortcoming, i.e., their adhesion to certain substrates such as high density polyethylene, polypropylene, rigid polyvinyl chloride, polystyrene, acrylonitrile-butadiene-styrene resins, and polyethylene terephthalate is far from outstanding. Further, hose made from extruded strands of polyethylene, ethylene/vinyl acetate copolymers, or ethylene/ethyl acrylate copolymers has proved difficult to weld with the hot melt adhesives currently available.

An object of this invention, therefore, is to provide a flexible, rubbery adhesive composition, which can be prepared, as a hot melt adhesive, quickly in low shear, sigma blade mixers without lump formation; has the same advantages as the very low density polyethylene (VLDPE) based hot melt adhesives; and has adhesive qualities superior to VLDPE particularly with respect to the substrates mentioned above and in hose welding.

Other objects and advantages will become apparent hereinafter.

According to the present invention, the above object is met by an adhesive composition comprising:

(a) a copolymer of ethylene and at least one alpha-olefin comonomer having 3 to 8 carbon atoms, said copolymer having a density equal to or less than about 0.91 gram per cubic centimeter; and

(b) as a tackifier, at least one rosin ester.

The ethylene/alpha-olefin copolymer is the result of the copolymerization of ethylene and at least one alpha-olefin comonomer having 3 to 8 carbon atoms. It can be prepared by the process described in European Patent Application 0 120 501 published on October 3, 1984, which is incorporated by reference herein. The conditions of the process can be readily adjusted to produce a porous granular polymer, the granules having a diameter in the range of about 25 microns to about 2500 microns, with a density equal to or less than about 0.91 gram per cubic centimeter and preferably in the range of about 0.85 to about 0.90 gram per cubic centimeter. The granules, in turn, can be extruded into pellets by conventional means. The portion of the copolymer attributed to the alpha-olefin comonomer is in the range of about 5 to about 50 percent by weight based on the weight of the copolymer and is preferably in the range of about 15 to about 40 percent by weight based on the weight of the copolymer. The balance of the copolymer is based on ethylene. The preferred comonomers are propylene, 1-butene, 1 hexene, and 1-octene. These copolymers have a high absorptive capacity and can be considered universal binders. When the propylene portion is present in amounts greater than about 25 weight percent, the ethylene/propylene copolymer is generally referred to as an ethylene/propylene rubber (EPR).

Within the noted density range, the higher densities will increase strength and be relatively less rubbery. In the EPR's, the higher the percentage of ethylene, again within the described range, the higher the strength with little loss of the rubbery characteristics.

The copolymer can be further based on an unsaturated silane comonomer containing at least one hydrolyzable group or the silane monomer can be grafted onto the copolymer. The presence of the hydrolyzable group makes the copolymers receptive to moisture cure. Moisture curable, hot melt adhesives have low initial viscosities which increase with time. This makes these adhesives easy to apply and provides hot melt adhesive formulations with excellent performance.

The silane grafted olefin copolymer can be prepared by the technique described below. In this copolymer, the portion attributed to the silane is present in an amount of about 0.5 percent to about 10 percent by weight based on the weight of the copolymer and is preferably incorporated into the copolymer in an amount of about 0.5 to about 4 percent by weight. The silane used to modify the copolymer can be, among others, a vinyl trialkoxy silane such as vinyl trimethoxy silane, vinyl triethoxy silane, or vinyl isopropoxy silane. Generally speaking, any unsaturated monomeric silane containing at least one hydrolyzable group can be used. If slower water cure or better shelf stability are desired, vinyl triisobutoxy silane or vinyl tris-(2-ethyl- hexoxy) silane can be used.

A free radical generator or catalyst is used in the preparation of the silane grafted polymer. Among the most useful free radical generators are dicumyl peroxide, lauroyl peroxide, azobisisobutyronitrile, benzoyl peroxide, tertiary butyl perbenzoate, di(tertiary-butyl) peroxide, cumene hydroperoxide, 2,5-dimethyl-2,5-di (t-butyl-peroxy) hexyne, 2,5-dimethyl-2,5-di (t-butylperoxy)hexane, tertiary butyl hydroperoxide, and isopropyl percarbonate. The organic peroxides are preferred. About 0.001 to about 5 percent by weight of free radical generator based on the weight of the copolymer is used, preferably about 0.001 to about 0.05 percent by weight.

The copolymer of ethylene and silane can be prepared by the process described in United States Patent 3,225,018 issued on December 21, 1965 or United States Patent 4,574,133 issued on March 4, 1986, both of which are incorporated by reference herein. The portion of the copolymer attributed to the silane is in the range of about 0.5 to about 10 percent by weight based on the weight of the copolymer and is preferably in the range of about 0.5 to about 4 percent by weight.

Various other processes for preparing silane grafted polyethylene and ethylene/silane copolymers and numerous unsaturated silanes suitable for use in preparing these polymers and bearing hydrolyzable groups such as alkoxy, oxy aryl, oxyaliphatic, and halogen are mentioned in United States patents 3,075,948; 4,412,042; 4,413,066; and 4,593,071, all of which are incorporated by reference herein.

A typical procedure for preparing a silane grafted polyethylene follows: 100 parts of ethylene/1-butene copolymer having a density of 0.90, 0.2 part of polymerized 1,3-dihydro-2,2,4-trimethylquinoline (an antioxidant), 0.1 part of dicumyl peroxide, and 4 parts of vinyl tri-2-ethyl-hexoxy silane are mixed in a laboratory Brabender mixer at a temperature in the range of about 80° C to about 115° C, a temperature low enough to keep the dicumyl peroxide below its decomposition temperature. After mixing for five minutes, the temperature is raised to a temperature in the range of about 150° C to about 220° C. The batch is then mixed for 5 to 10 minutes during which grafting of the silane to the copolymer occurs. The antioxidant is used as a radical trap to control the amount of crosslinking. The foregoing technique can be repeated, for example, with 3 parts of vinyltriisobutoxysilane and 0.1 part of the antioxidant, tetrakis[methylene(3-5-di-tertbutyl-4-hydroxyhydro-cinnamate)] methane; initial mixing is in the range of 110° C to 120° C; grafting is for 5 minutes at 185° C.

Tackifier resins are conventionally used in adhesive compositions. They are organic substances, which are sticky by nature and, because, when molten, they dissolve in the polymers with which they are mixed, impart this stickiness to the polymer. They are used in amounts of about 5 to about 60 percent by weight of tackifier based on the weight of the adhesive composition, and preferably in amounts of about 30 to about 50 percent by weight.

The particular tackifier resins of interest here are the rosin esters. Rosins are unsaturated acids of the abietic type having the general formula $C_{19}H_{29}COOH$. An unsaponifiable portion of the rosin, about 3 to 10 percent, contain hydrocarbons and high molecular weight alcohols. Rosin esters, as used in this specification, are produced by the esterification of rosin with polyhydric alcohols such as glycerol, pentaerythritol, and neopentyl glycol. The rosin esters can be hydrogenated to reduce the unsaturation, if desired, and mixtures of rosin esters can be used. The polyhydric alcohols used in the esterification can have 2 to 5 hydroxyl groups, and the number of carbon atoms in each polyhydric alcohol can be in the range of about 2 to about 5.

3

An optional, but desirable additive, to the copolymer/tackifier composition is a viscosity adjuster. These compounds serve to further soften the adhesive composition and increase its adhesive qualities, i.e., they make the adhesive stickier. These compounds also enhance mixing. They are introduced into the composition in amounts of about 5 to about 60 percent by weight of tackifier based on the weight of the adhesive composition, and preferably in amounts of about 30 to about 50 percent by weight. Examples of compounds which are suitable as viscosity adjusters are paraffin oil, naphthenic oil, mineral oil, liquid polybutene, and synthetic waxes such as polyethylene wax and polyethylene glycols, chloronapthalenes, sorbitols, and chlorotrifluoroethylenes of waxy consistency.

Various conventional additives can be added to the adhesive compositions such as antioxidants, ultraviolet absorbers, antistatic agents, pigments, dyes, fillers including carbon black, slip agents, fire retardants, stabilizers, and smoke inhibitors.

Adhesive compositions are commonly made in a Baker Perkins or a similar sigma blade mixer. In a typical mixing procedure for an adhesive, the sigma blade mixer is heated to about 150°C to about 180°C. The VLDPE is dry blended with about 0.01 percent by weight of a conventional stabilizer. This mixture is then introduced into the mixing apparatus where it is melted. The tackifier is added slower to the molten VLDPE/stabilizer mixture until a solution is obtained. A viscosity adjuster is added where viscosity adjustment is desired. Optional additives such as fillers and pigments are then added. The molten product is then discharged and applied to a substrate.

Advantages of subject hot melt adhesives are: adhesion to non-polar substrates, e.g., to polyethylenes that have not been treated with corona discharge; adhesion at high and low temperatures; excellent flex life, e.g., in hose applications; good moisture resistance; and excellent aging properties.

The invention is illustrated by the following examples:

## Examples 1 to 3

The adhesive compositions are prepared as described above.

Each copolymer granule is porous and has a diameter in the range of 25 to 2500 microns.

The adhesive compositions are as follows:

## Example 1

| | Percent by Weight |
|---|---|
| copolymer of ethylene and 1-butene (1-butene portion approx. 26% by weight); density = 0.89 g/cc; melt index = 60 g/10 min | 35 |
| mineral oil | 15 |
| tackifier: glycerin rosin | 50 |

The properties of the hot melt adhesive are as follows:

I. Tack = 250 grams. This is determined in accordance with ASTM-D-2979-7 using a Polyken Probe Tack Tester manufactured by the Kendal Company. The apparatus is operated at 25°C with a weight of 100 grams per square centimeter; a dwell time of 1 centimeter per second; and a carriage speed of 1 centimeter per second.

II. Peel Strength = 2 to 4 pounds per linear inch. This property is determined in accordance with ASTM-D-930 (180°C peel).

The composition of example 1 is found to have excellent adhesion to high density polyethylene; polypropylene; rigid polyvinyl chloride; polystyrene; acrylonitrile-butadiene styrene resin; and polyethylene

terephthalate.

## Example 2

| | Percent by Weight | |
|---|---|---|
| | (A) | (B) |
| ethylene/propylene copolymer (22% by weight propylene) density = 0.88 g/cc | 35 | 50 |
| mineral oil | 0 | 50 |
| tackifier: glycerin rosin | 50 | 50 |

Compositions (A) and (B) of Example 2 are found to have excellent tack, peel strength, and adhesion to high density polyethylene; rigid polyvinyl chloride; polystyrene; acrylonitrile-butadiene-styrene resin; polyethylene terephthalate; paper; and cotton.

## Example 3

| | Percent by Weight |
|---|---|
| copolymer of ethylene and 1-butene (1-butene portion approx. 26% by weight); density = 0.90 g/cc; melt index = 0.5 g/10 min | 95 |
| tackifier: glycerin rosin | 5 |

A hose made from extruded strands of VLDPE having a density of 0.90 gram per cubic centimeter is welded with the above composition. The hose passes all of the requirements of fabrication, and, in addition, passes the one million flex cycle test which is carried out by simply bending a short length of hose at one point until the bent portions touch each other. The number of times the hose is bent or flexed is counted until the hose cracks or breaks. Subject hose is flexed one million times without cracking or breaking.

## Claims

1. An adhesive composition comprising:
(a) a copolymer of ethylene and at least one alpha-olefin comonomer having 3 to 8 carbon atoms, said copolymer having a density equal to or less than 0.91 gram per cubic centimeter; and
(b) as a tackifier, at least one rosin ester.

2. The composition defined in claim 1 wherein the amount of tackifier is in the range of about 5 to about 60 percent by weight based on the weight of the adhesive composition.

3. The composition defined in any one of claims 1 and 2 additionally containing paraffin oil, naphthenic oil, mineral oil, liquid polybutene, or a synthetic wax, or mixtures thereof.

4. The composition defined in any one of claims 1 to 3 wherein the copolymer is an ethylene/propylene copolymer in which the portion of the copolymer attributed to propylene is present in a range of about 15 to about 40 percent by weight based on the weight of the copolymer.

5. The composition defined in any one of claims 1 to 4 wherein the portion of the copolymer attributed to the alpha-olefin is in the range of about 5 to about 50 percent by weight based on the weight of the copolymer.

6. The composition defined in any one of claims 1 to 5 wherein the density is in the range of about 0.85 to 0.90 gram per cubic centimeter.

7. The composition defined in any one of claims 1 to 3, 5 and 6 wherein the alpha-olefin is 1-butene.

8. The composition defined in any one of claims 1 to 7 wherein the rosin ester is glycerin rosin.

9. The composition defined in any one of claims 1 to 8 additionally containing a viscosity adjuster in an amount of about 5 to about 50 percent by weight based on the weight of the adhesive composition.

10. The composition defined in claim 9 wherein the viscosity adjuster is paraffin oil, naphthenic oil, mineral oil, liquid polybutene, or a synthetic wax, or mixtures thereof.

11. The composition defined in any one of claims 1 to 10 wherein (i) the copolymer is additionally based on an unsaturated silane comonomer containing at least one hydrolyzable group or (ii) the copolymer has said silane comonomer grafted thereto.

12. The composition defined in claim 11 wherein the copolymer is an ethylene/propylene/silane copolymer in which the portion of the copolymer attributed to propylene is present in a range of about 15 to about 40 percent by weight based on the weight of the copolymer.